# EUROPÄISCHE PATENTANMELDUNG

(11) **EP 1 126 158 A2**
(43) Veröffentlichungstag der Anmeldung: **22.08.2001**
(21) Anmeldenummer: 01101903.1
(22) Anmeldetag: 27.01.2001
(51) Int. Cl.: F02M 37/22

(54) **Vorrichtung zum Ausscheiden von Wasser aus Dieselkraftstoff**

(30) Priorität: 17.02.2000 DE 10007134
(71) Anmelder: Bayerische Motoren Werke Aktiengesellschaft, 80809 München (DE)
(72) Erfinder: Hopfinger, Peter, 85779 Neubiberg (DE)

(57) **Zusammenfassung**

Eine Vorrichtung zum Abscheiden von Wasser aus Dieselkraftstoff mit einem Wasserabscheider 1 zum Sammeln des Wassers, welches aus dem in einem Kraftfahrzeugtank vorgesehenen Dieselkraftstoff abgeschieden ist, wobei der Wasserabscheider 1 über eine Leitung 5 mit der Auspuffanlage 2 des Kraftfahrzeugs verbunden ist, und in der Leitung 5 ein Förderdruck für den Transport des abgeschiedenen Wassers zur Auspuffanlage 2 vorgesehen ist, in welcher das abgeschiedene Wasser verdampft wird.

## Beschreibung

Die Erfindung betrifft eine Vorrichtung zum Abscheiden von Wasser aus Dieselkraftstoff nach dem Oberbegriff des Patentanspruches 1.

### [Stand der Technik]

Es ist bekannt, bei der Kraftstoffversorgung von Dieselmotoren einen Wasserabscheider vorzusehen. Dieser Wasserabscheider besitzt einen Sammelraum für das abgeschiedene Wasser mit einem begrenzten Aufnahmevolumen von beispielsweise 0,251. Bei den Wartungsarbeiten wird das abgeschiedene Wasser entleert und entsorgt. Es ist auch bekannt, eine Wasserstandsanzeige vorzusehen, die dem Fahrzeughalter anzeigt, daß diese Arbeiten durchgeführt werden sollen. Das Aufnahmevolumen des im Wasserabscheider gesammelten Wassers ist durch den am Kraftfahrzeug vorhandenen Bauraum begrenzt. Es besteht daher bei Dieselkraftstoffen, welche einen hohen Wasseranteil haben, der über 2% bis 5% hinausgeht, die Gefahr, daß Schäden an der Einspritzpumpe bzw. den Injektoren des Kraftstoffeinspritzsystems auftreten. Diese Gefahr besteht insbesondere dann, wenn Dieselkraftstoff mit hohem Wasseranteil von bis zu 25%, wie es beispielsweise in osteuropäischen Ländern der Fall ist, zum Einsatz kommt. Korrosionsanfällige Teile innerhalb der Einspritzpumpe und des Einspritzsystems, wie beispielsweise Schleifkontakte, können daher zu Funktionsstörungen und Ausfällen innerhalb relativ kurzer Zeiträume, die innerhalb des Gewährleistungszeitraumes liegen, führen.

### [Aufgabe der Erfindung]

Aufgabe der Erfindung ist es daher, eine Vorrichtung zum Abscheiden von Wasser aus Dieselkraftstoff der eingangs genannten Art zu schaffen, bei dem das Fassungsvermögen des Wasserabscheiders minimiert werden kann.

Diese Aufgabe wird erfindungsgemäß durch die kennzeichnenden Merkmale des Patentanspruches 1 gelöst. Die Unteransprüche beinhalten vorteilhafte Weiterbildungen der Erfindung.

Durch die Erfindung ist eine kontinuierliche Wasserabscheidung gewährleistet. Dies wird dadurch erreicht, daß der Wasserabscheider bzw. der Sammelraum für das Wasser im Wasserabscheider über eine Leitung mit der Auspuffanlage des Kraftfahrzeugs verbunden ist. In der Leitung wird ein Förderdruck beispielsweise Unterdruck hergestellt, der für den ständigen Transport des abgeschiedenen Wassers zur Auspuffanlage sorgt. In der Auspuffanlage ist eine Verdampfungsstelle vorgesehen, an welcher eine ausreichend hohe Temperatur zum Verdampfen des abgeschiedenen Wassers herrscht.

Im Wasserabscheider bzw. im Sammelraum für das Wasser im Wasserabscheider kann ein Wasserstandsfühler vorgesehen sein, der bei Überschreiten eines festgelegten Füllstandes im Wasserabscheider die Funktion des oben beschriebenen Systems einleitet. Bei Unterschreiten des Füllstandes wird die Ableitung von Wasser aus dem Wasserabscheider eingestellt.

In der Leitung kann ein Ventil vorgesehen sein, welches in Abhängigkeit von einer zum Verdampfen des Wassers ausreichende Temperatur, d.h. einer Mindesttemperatur von ca. 100°C an der Verdampfungsstelle geöffnet wird. Hierzu kann eine Temperaturmeßeinrichtung (Temperaturfühler) im Bereich der Verdampfungsstelle vorgesehen sein, welche mit einer das Ventil ansteuernden Steuereinrichtung verbunden ist. Ferner kann eine ebenfalls mit der Steuereinrichtung verbundene Druckmeßeinrichtung vorgesehen sein, so daß festgestellt werden kann, ob an der Verdampfungsstelle in der Abgasanlage die für eine vollständige Verdampfung erforderlichen Zustände vorliegen. Die Informationen über die Temperatur und den Druck wird der Steuereinrichtung in Form von Meßsignalen zugeführt. Die Steuereinrichtung kann Bestandteile einer elektronischen Motorsteuerung sein und führt die oben beschriebene Auswertung der Meßsignale durch.

Zur Erzeugung des Förderdrucks in der Leitung kann ein Unterdruckerzeuger vorzugsweise an der Einleitungsstelle der Leitung in die Auspuffanlage vorgesehen sein. Hierdurch erreicht man den erforderlichen Druckunterschied zwischen dem Kraftstoffsystem bzw. dem Wasserabscheider und der Abgasanlage zur Förderung des abgeschiedenen Wassers. Dies kann beispielsweise durch eine Saugstrahlpumpe erreicht werden, in welcher der Massenstrom in der Abgasanlage den erforderlichen Unterdruck an der Einleitungsstelle erzeugt.

Hierdurch erreicht man eine gesteuerte Zuführung des abgeschiedenen Wassers gegebenenfalls mit geringen Anteilen an Emulgat über die Leitung in die Auspuffanlage. Änderungen der Abgaszusammensetzung fallen in nennenswertem Umfang nicht an. Eine eventuelle Erhöhung der CH-Anteile wird durch Minderung von NOₓ-Anteilen aufgewogen.

Die Einleitungsstelle für das abgeschiedene Wasser liegt - in Strömungsrichtung betrachtet - bevorzugt vor einem Abgasnachbehandlungssystem wie beispielsweise einem Katalysator.

Durch die Erfindung erreicht man ein Freihalten des Einspritzsystems von Wasser, das im Dieselkraftstoff vorhanden ist. Eine Verbesserung der Abscheidungswirkung über die herkömmliche Schwerkraftabscheidung hinaus, kann beispielsweise durch eine Zentrifuge erreicht werden. Man erreicht durch die Erfindung eine Erhöhung der Lebensdauer der Einspritzanlage. Das zusätzliche Gewicht läßt sich im wesentlichen durch eine Verringerung der Größe des Kraftstoff-Filters weitgehend kompensieren.

### [Beispiele]

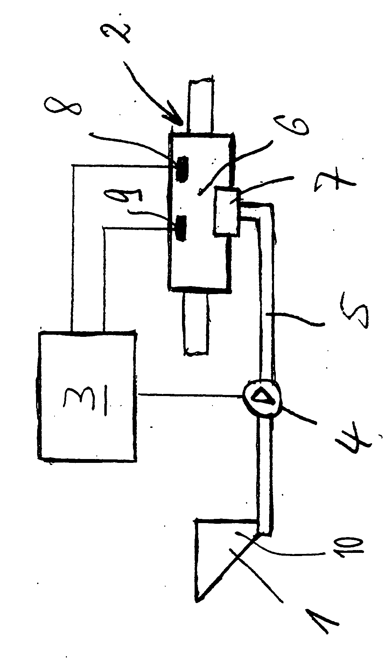

Anhand der Figur, in welcher schematisch ein Ausführungsbeispiel dargestellt ist, wird die Erfindung noch näher erläutert.

Ein Wasserabscheider 1 eines Dieselkraftstoffsystems eines Kraftfahrzeugs ist über eine Leitung 5 mit einer Auspuffanlage 2 des Kraftfahrzeugs verbunden. In der Auspuffanlage 2 ist eine Verdampfungsstelle 6 vorgesehen, durch welche der Abgasstrom des Dieselmotors hindurchströmt und eine Mindesttemperatur von 100°C aufweist. Um das im Wasserabscheider 1 aus dem Dieselkraftstoff abgeschiedene Wasser an die Verdampfungsstelle 6 zu bringen, wird in der Leitung 5 ein Förderdruck, insbesondere Unterdruck erzeugt. Hierzu dient ein Unterdruckerzeuger 7, welcher an der Einleitungsstelle der Leitung 5 in die Auspuffanlage 2 vorgesehen ist. Der Unterdruckerzeuger 7 kann eine Saugstrahlpumpe sein, durch welche der Massenstrom des Abgases hindurchströmt und den erforderlichen Unterdruck erzeugt.

Im Bereich der Verdampfungsstelle 6 befinden sich eine Temperaturmeßeinrichtung und eine Druckmeßeinrichtung 9. Diese Meßeinrichtungen erfassen die an der Verdampfungsstelle 6 herrschende Temperatur und den Druck und liefern entsprechende Meßsignale an eine Steuereinrichtung 3. Die Steuereinrichtung 3 kann Bestandteil der elektronischen Motorsteuerung sein und rechnergestützt die Meßsignale der Temperaturmeßeinrichtung 8 und der Druckmeßeinrichtung 9 auswerten.

Wenn die Temperatur und der Druck an der Verdampfungsstelle 6 derart sind, daß eine vollständige Verdampfung des abgeschiedenen Wassers gewährleistet ist, wird von der Steuereinrichtung 3 ein in der Leitung 5 vorgesehenes Ventil 4 geöffnet. Das abgeschiedene Wasser gelangt an die Verdampfungsstelle 6 und wird dort vollständig verdampft.

Hierdurch erreicht man eine kontinuierliche Wasserabscheidung aus dem Dieselkraftstoff, so daß das Aufnahmevolumen im Abscheider für abgeschiedenes Wasser minimiert werden kann. Außerdem ist der dem Einspritzsystem des Dieselmotors zugeführter Kraftstoff frei von Wasser, so daß die Lebensdauer der Einspritzanlage deutlich erhöht werden kann.

### [Bezugszeichenliste]

- 1: Wasserabscheider
- 2: Auspuffanlage
- 3: Steuereinrichtung
- 4: Ventil
- 5: Leitung
- 6: Verdampfungsstelle
- 7: Unterdruckerzeuger
- 8: Temperaturmeßeinrichtung
- 9: Druckmeßeinrichtung
- 10: Wasserstandsfühler

## Patentansprüche

1. Vorrichtung zum Abscheiden von Wasser aus Dieselkraftstoff mit einem Wasserabscheider zum Sammeln des Wassers, welches aus dem in einem Kraftfahrzeugtank vorgesehenen Dieselkraftstoff abgeschieden ist, dadurch gekennzeichnet, daß der Wasserabscheider (1) über eine Leitung (5) mit der Auspuffanlage (2) des Kraftfahrzeugs verbunden ist, wobei in der Leitung (5) ein Förderdruck für den Transport des abgeschiedenen Wassers zur Auspuffanlage (2) vorgesehen ist, und daß in der Auspuffanlage (2) eine Verdampfungsstelle (6) vorgesehen ist, an welcher das abgeschiedene Wasser verdampft wird.

2. Vorrichtung nach Anspruch 1, dadurch gekennzeichnet, daß in der Leitung (5) ein Ventil (4) vorgesehen ist, welches in Abhängigkeit von einer zum Verdampfen des Wassers ausreichenden Temperatur an der Verdampfungsstelle (6) geöffnet ist.

3. Vorrichtung nach Anspruch 2, dadurch gekennzeichnet, daß eine Temperaturmeßeinrichtung (8) im Bereich der Verdampfungsstelle (6) vorgesehen ist, die mit einer das Ventil (4) ansteuernden Steuereinrichtung (3) verbunden ist.

4. Vorrichtung nach einem der Ansprüche 1 bis 3, dadurch gekennzeichnet, daß zur Erzeugung des Förderdruckes in der Leitung (5) ein Unterdruckerzeuger (7) an der Einleitungsstelle der Leitung (5) in die Auspuffanlage (2) vorgesehen ist.
